# EUROPÄISCHE PATENTANMELDUNG

(11) **EP 1 908 734 A1**
(43) Veröffentlichungstag der Anmeldung: **09.04.2008**
(21) Anmeldenummer: 07019481.6
(22) Anmeldetag: 04.10.2007
(51) Int. Cl.: C03B 9/195

(54) **Verfahren und Vorrichtung zur Herstellung von Glaskrügen**

(30) Priorität: 05.10.2006 DE 102006047179
(71) Anmelder: W. Lindner Maschinen GmbH, 94481 Grafenau-Reismühle (DE)
(72) Erfinder: Lindner, Walter, 94566 Riedlhütte (DE)
(74) Vertreter: Manitz, Finsterwald & Partner GbR

(57) **Zusammenfassung**

Die Erfindung beschreibt ein Verfahren zur Herstellung von Glaskrügen mit einem offenen Henkel, bei dem in aufeinander folgenden Stationen einer Maschine zunächst durch Press- und Kühlvorgänge ein halbfertiger Artikel in Form eines Kölbels hergestellt und dieses Kölbel dann in eine Blasform überführt, in weiteren Blas- und Kühlstationen zum Fertigprodukt geformt und aus der Maschine entnommen wird. Dieses Verfahren zeichnet sich dadurch aus, dass sämtliche aufeinander folgenden Stationen auf einer einzigen Kreisbahn angeordnet sind und die verwendeten Press- und Blasformen taktweise längs dieser Kreisbahn in stets gleicher Richtung bewegt werden, wobei eine jeweils gleiche Anzahl von Press- und Blasformen alternierend aufeinander folgt, dass nach dem Einspeisen eines Glastropfens in eine der Pressformen und dem Durchlaufen einer vorgebbaren Anzahl von Press- und Kühlstationen das gebildete Kölbel in einer ebenfalls auf der Kreisbahn liegenden Aushebestation der Pressform entnommen und durch Vorwärts- oder Rückförderung zu einer unmittelbar nach oder vor der Aushebestation gelegenen Transferstation in eine sich in dieser Transferstation befindende Blasform überführt wird, und dass nach dem Durchlaufen einer vorgebbaren Anzahl von Blas- und Kühlstationen der aus dem Kölbel geformte fertige Artikel in einer ebenfalls auf der Kreisbahn gelegenen Entnahmestation entnommen wird.

## Beschreibung

Die vorliegende Erfindung betrifft ein Verfahren zur Herstellung von Weithalsgefäßen aus Glas, insbesondere von einen offenen Henkel aufweisenden Krügen, bei dem in aufeinander folgenden Stationen einer Maschine zunächst durch Press- und Kühlvorgänge ein halbfertiger Artikel in Form eines Kölbels hergestellt und dieses Kölbel dann in eine Blasform überführt, in weiteren Blas- und Kühlstationen zum Fertigprodukt geformt und aus der Maschine entnommen wird. Des Weiteren ist die Erfindung auf eine Vorrichtung zur Durchführung dieses Verfahrens gerichtet.

Das eingangs genannte Verfahren ist bekannt und wird in der Praxis im Regelfall mit so genannten Twintable-Maschinen realisiert.
Derartige Twintable-Maschinen bestehen aus zwei nebeneinander angeordneten Drehtellern, wobei der erste Drehteller eine Kölbelpresse und der zweite Drehteller eine Ausblasmaschine bildet. Diese beiden Drehteller sind über einen relativ aufwändig, gestalteten Übergabemechanismus verbunden, der dazu dient, den halbfertigen Artikel vom Drehteller der Kölbelpresse auf den Drehteller der Ausblasmaschine zu überführen.

Abgesehen davon, dass die Twintable-Maschinen relativ raumbeanspruchend sind und auch einen entsprechenden Herstellungsaufwand erfordern, ist nachteilig, dass der Übergabemechanismus im Mittelbereich zwischen den beiden Drehtellern und oberhalb dieser Drehteller angebracht werden muss und daher sehr schlecht zugänglich ist. Dies wirkt sich bei erforderlichen Wartungs- und Einstellarbeiten am Übergabemechanismus sehr nachteilig aus, da solche Wartungs- und Einstellarbeiten häufig bei laufender Maschine durchgeführt werden, da ein Stillsetzen der Anlage unerwünscht und aus allen Fachleuten bekannten Gründen sehr problematisch ist.

Aufgabe der Erfindung ist es daher, ein Verfahren und eine Vorrichtung zur Herstellung von Weithalsgefäßen aus Glas, insbesondere zur Herstellung von einen offenen Henkel aufweisenden Krügen zu schaffen, das besonders einfach zu realisieren ist und in raumsparender und kostengünstiger Weise mittels einer allseitig gut zugänglichen Maschine realisiert werden kann, die überdies eine Beschleunigung der Fertigung gestattet.

Gelöst wird diese Aufgabe ausgehend von dem eingangs angegebenen Verfahren nach der Erfindung dadurch, dass sämtliche aufeinander folgenden Stationen auf einer einzigen Kreisbahn angeordnet sind und die verwendeten Press- und Blasformen taktweise längs dieser Kreisbahn in stets gleicher Richtung bewegt werden, wobei eine jeweils gleiche Anzahl von Press- und Blasformen alternierend aufeinander folgt, dass nach dem Einspeisen eines Glastropfens in eine der Pressformen und dem Durchlaufen einer vorgebbaren Anzahl von Press- und Kühlstationen das gebildete Kölbel in einer ebenfalls auf der Kreisbahn liegenden Aushebestation der Pressform entnommen und durch Rückförderung zu einer unmittelbar vor der Aushebestation gelegenen oder durch Vorwärtsförderung zu einer unmittelbar auf die Aushebestation folgenden Transferstation in eine sich in dieser Transferstation befindende Blasform überführt wird, und dass nach dem Durchlaufen einer vorgebbaren Anzahl von Blas- und Kühlstationen der aus dem Kölbel geformte fertige Artikel in einer ebenfalls auf der Kreisbahn gelegenen Entnahmestation entnommen wird.

Durch die neuartige Anordnung und Verteilung der Press- und Blasformen auf einer Kreisbahn, das über definierte Winkelbereiche getaktete Anfahren der um die Kreisbahn verteilten Bearbeitungs- bzw. Behandlungsstationen durch die Press- und Blasformen sowie den Einsatz einer Entnahme- und Verfahreinheit zwischen einer Aushebestation und einer Transferstation wird es möglich, sämtliche zur Herstellung des jeweiligen Artikels erforderlichen Bearbeitungs- bzw. Behandlungsschritte auf der einzigen Kreisbahn durchzuführen und damit einen äußerst wirtschaftlichen und auch betriebssicheren Verfahrensablauf zu gewährleisten.

Durch die gezielte Ineinanderschachtelung von Pressformen und Blasformen von gleicher Anzahl auf der Kreisbahn lassen sich während des Umlaufs alle Formen optimal nutzen. Insbesondere ist es auch möglich, jeweils mehrere in der Taktfolge aufeinander folgende Kühlstationen vorzusehen, wodurch die Produktionsleistung der Maschine gesteigert werden kann.

Vorteilhafte Ausführungen des erfindungsgemäßen Verfahrens sind in den Ansprüchen 2 bis 6 angegeben.

Eine besonders vorteilhafte Vorrichtung zur Ausführung des erfindungsgemäßen Verfahrens zeichnet sich dadurch aus, dass ein taktweise antreibbarer Schaltteller vorgesehen ist, auf dem in Kreisform eine vorgebbare und gleiche Anzahl von Pressformen und Blasformen jeweils alternierend angeordnet ist, dass um den Schaltteller verteilt stationäre Stationen angeordnet sind, die ausgehend von einer Glasposten-Speisestation wenigstens eine Pressstation und zumindest eine Kühlstation umfassen, auf die eine Aushebestation zur Kölbelentnahme und eine dieser unmittelbar vorgelagerte oder unmittelbar nachgelagerte Transferstation folgen, dass zum Zwecke der Überführung des jeweiligen Kölbels von der Aushebestation zur Transferstation eine Entnahme- und Verfahreinheit vorgesehen ist, und dass nach der Transferstation zumindest eine Blasstation vorgesehen ist, der zumindest eine Kühlstation nachgeordnet ist, auf die eine Entnahmestation für das fertige Produkt folgt.

Diese Realisierung der Erfindung führt praktisch dazu, dass zwei Maschinen, nämlich eine Press-Rundtischmaschine und eine Blas-Rundtischmaschine, zu einer einzigen raumsparend aufgebauten Maschine zusammengefasst bzw. integriert werden.

Die zwischen der Aushebestation und der Transferstation vorgesehene, eine Rückwärtsförderung oder Vorwärtsförderung des jeweiligen Kölbels aus der Pressform in die benachbarte Blasform bewirkende Entnahme-und Verfahreinheit lässt sich raumsparend gestalten und ist voll zugänglich, so dass Einstell- und Wartungsarbeiten keine Probleme verursachen oder spezielle Gefahren mit sich bringen, wie dies bei herkömmlichen Maschinen der Fall ist.

Besonders vorteilhafte Ausgestaltungen der erfindungsgemäßen Vorrichtung sind in den Unteransprüchen 8 bis 10 angegeben, während der Anspruch 11 eine vorteilhafte Verwendung einer erfindungsgemäßen Maschine betrifft, die dann erfolgen kann, wenn resultierend aus der jeweiligen Auftragslage keine Krüge zu produzieren sind.

Die Erfindung wird nachfolgend anhand eines Ausführungsbeispiels unter Bezugnahme auf die Zeichnungen erläutert; in den Zeichnungen zeigen:
- Fig. 1: eine schematische, nach Art einer Draufsicht dargestellte Ansicht einer erfindungsgemäßen Vorrichtung zur Herstellung von Glaskrügen mit offenem Henkel, und die

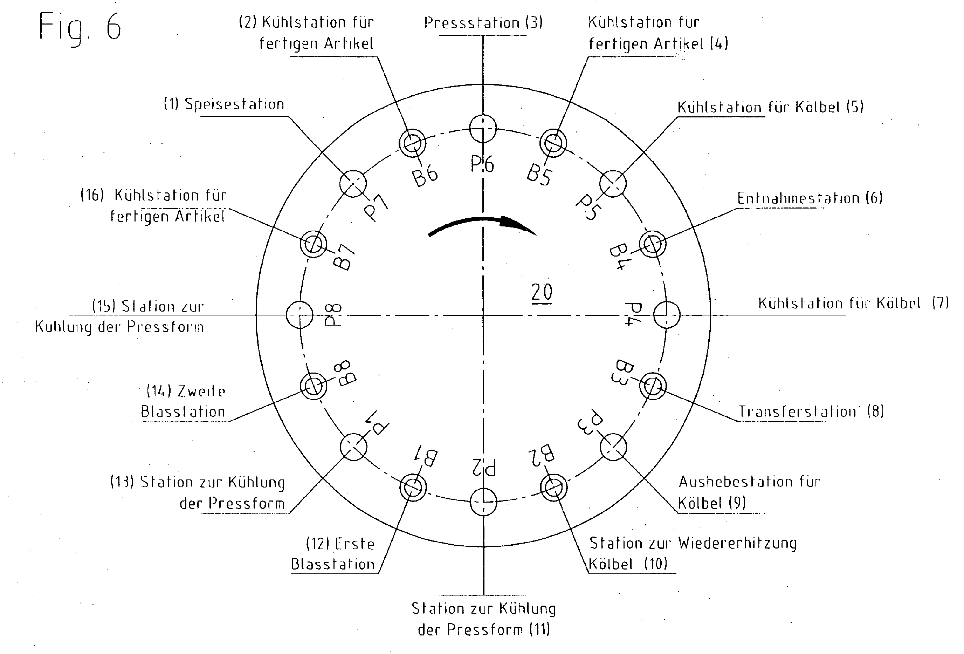

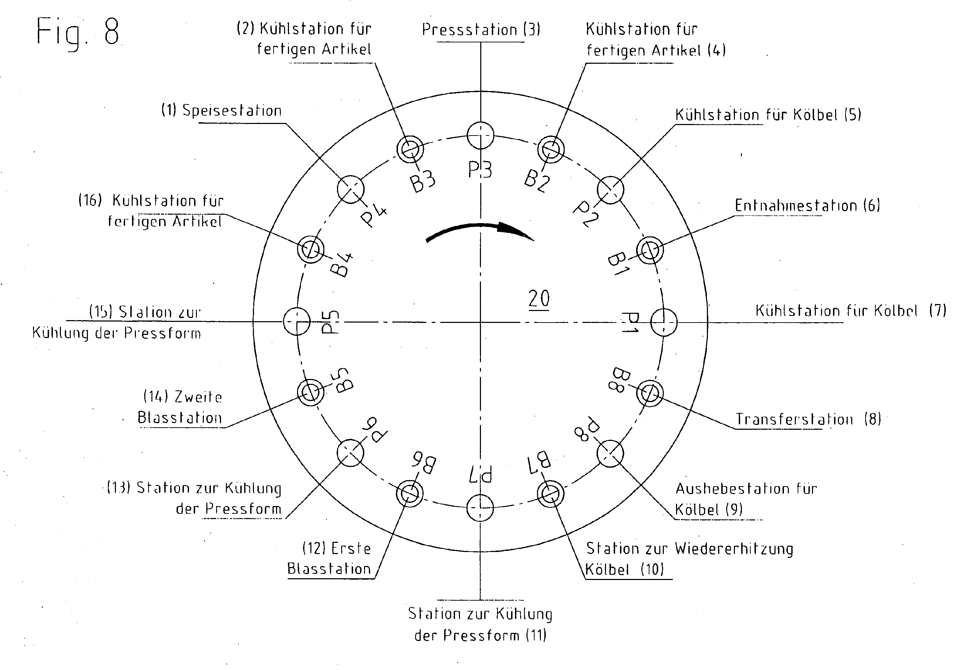

- Fig. 2 bis 8: verschiedene aufeinander folgende Betriebssituationen der Maschine nach Fig. 1 im Zuge der Glaskrugfertigung.

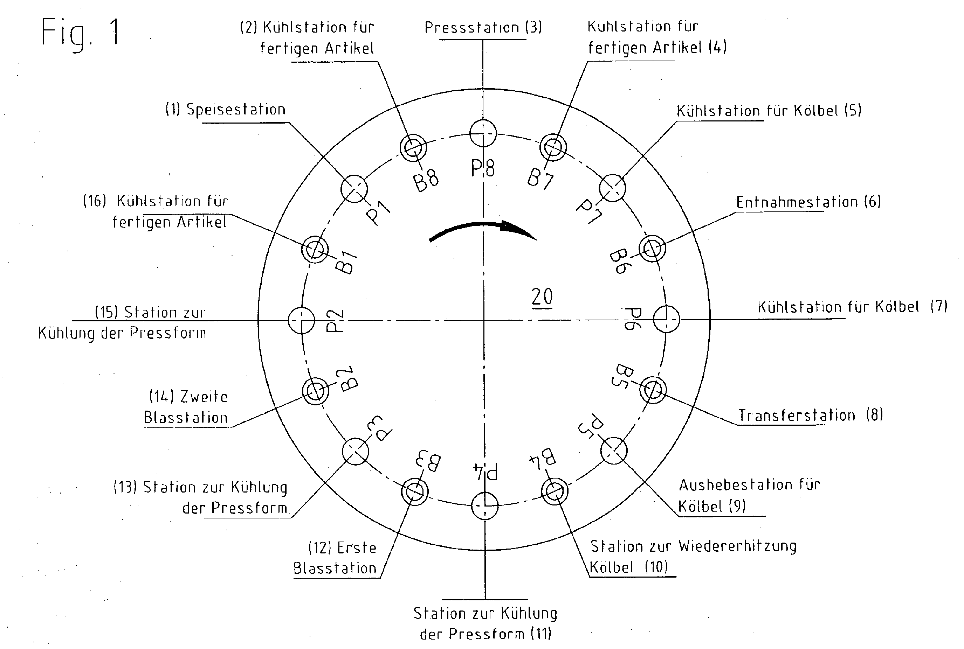

Fig. 1 zeigt einen Dreh- bzw. Schaltteller 20, um dessen Umfang gleichmäßig verteilt insgesamt sechzehn Stationen vorgesehen sind, in denen definierte, im Einzelnen noch zu erläuternde Vorgänge ablaufen.

Auf dem Schaltteller befindet sich eine der Anzahl der Stationen entsprechende Anzahl von Formen, und zwar eine gleiche Anzahl von Pressformen P1 bis P8 und von Blasformen B1 bis B8, wobei diese Press- und Blasformen jeweils alternierend auf dem Schaltteller angeordnet sind.

Der in der Zeichnung dargestellte Fall ist jedoch keineswegs einschränkend, es können vielmehr Maschinen je nach Aufgabenstellung konstruiert werden, zum Beispiel Maschinen mit zwölf Stationen und damit sechs Pressformen und sechs Blasformen, Maschinen mit vierzehn Stationen und damit sieben Pressformen und sieben Blasformen und Maschinen mit sechzehn Stationen und jeweils acht Pressformen und acht Blasformen usw.

Die Fertigung des jeweiligen Artikels, insbesondere eines Glaskruges mit offenem Henkel, erfolgt nach der Beschickung einer Pressform mit einem Glasposten im Zuge des Durchlaufens aller um den Schaltteller 20 herum angeordneten Stationen bis zur Entnahmestation 6.

Die Arbeitsweise der erfindungsgemäßen Vorrichtung wird nachfolgend anhand der verschiedenen Abbildungen geschildert.

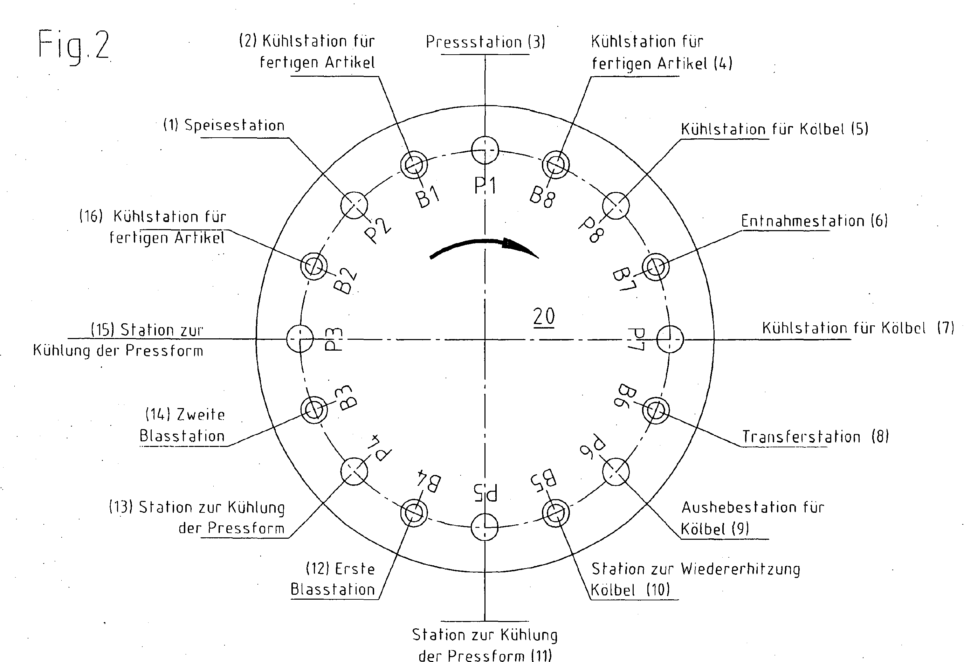

Nach Fig. 1 befindet sich eine erste Pressform P1 in der Speisestation 1, in der der Pressform ein Glasposten zugeführt wird. Beim taktweisen Weiterschalten des Drehtellers über einen Winkel von 45° gelangt die Pressform P1 in ihre nächste Position, nämlich in die Pressstation 3, wie dies in Fig. 2 gezeigt ist. Der Taktwinkel von 45° ergibt sich im Falle des geschilderten Beispiels aus der Tatsache der Verwendung von acht Pressformen bzw. der Kombination von acht Pressformen und acht Blasformen.

Gleichzeitig mit der Überführung der Pressform P1 von der Speisestation 1 in die Pressstation 3 wird der Speisestation 1 eine neue Pressform P2 zugeführt, wobei in der nachfolgenden Beschreibung des Verfahrensablaufs nur die sich im Zusammenhang mit dem in die Pressform P1 eingebrachten Glasposten durchzuführenden Vorgänge erläutert werden, da die Vorgänge für alle weiteren Formen in analoger Weise ablaufen.

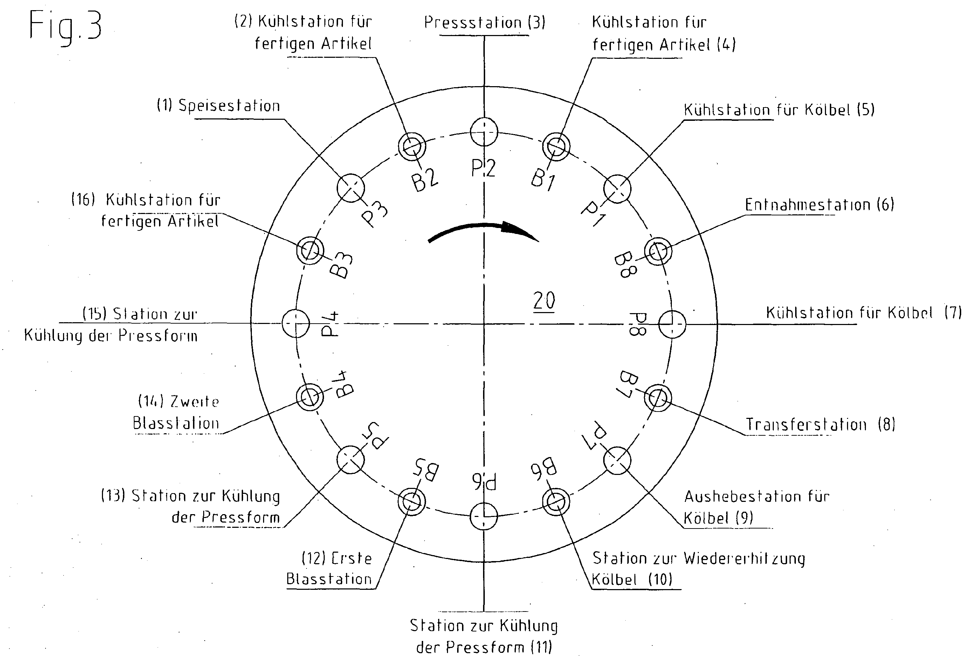

Nachdem bezüglich des sich in der Pressform P1 befindenden Glaspostens in der Pressstation 3 der vorgegebene Pressvorgang durchgeführt und ein Kölbel gebildet worden ist, erfolgt ein Weiterschalten wiederum über einen Winkelbereich von 45° in die nächste Station, d.h. in die Kühlstation 5, wie dies in Fig. 3 gezeigt ist.
Auf die Kühlstation 5 folgt im dargestellten Beispiel eine weitere Kühlstation 7, in der das Kölbel weiter abgekühlt und verfestigt wird. Es ist im Einzelfall möglich, die Zahl der Kühlstationen so zu wählen, dass sich insgesamt ein optimaler Betrieb einstellt, was vom jeweils zu fertigenden Gegenstand abhängig ist.

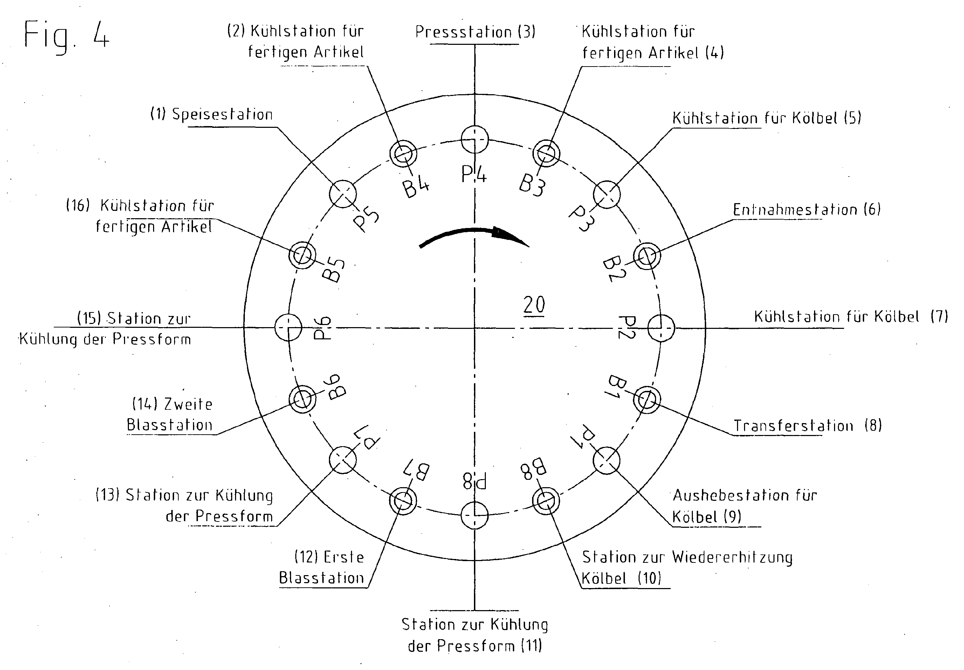

Nach dem Verlassen der letzten Kühlstation 7 gelangt die Pressform P1 in die Aushebestation 9, wie dies in Fig. 4 gezeigt ist. In Drehrichtung des Schalttellers 20 betrachtet ist der Aushebestation 9 unmittelbar eine Transferstation 8 vorgeordnet, in der sich entsprechend der abwechselnden Anordnung von Press- und Blasformen auf dem Schaltteller eine leere Blasform befindet.

Zwischen der Aushebestation 9 und der Transferstation ist eine in der Zeichnung nicht dargestellte Entnahme- und Verfahreinheit vorgesehen, mittels der das jeweilige Kölbel in der Aushebestation 9 aus der Pressform entnommen und in die Transferstation 8 rückgeführt und dort in die leere Blasform eingesetzt werden kann.
Demgemäß erfolgt dann, wenn - wie in Fig. 4 gezeigt - die Pressform P1 im vorliegend geschilderten Beispiel die Aushebestation 9 erreicht hat, eine Entnahme und Rückführung des Kölbels bei still stehendem Schaltteller in die Transferstation 8, wo das Kölbel in die Blasform B 1 eingebracht wird.

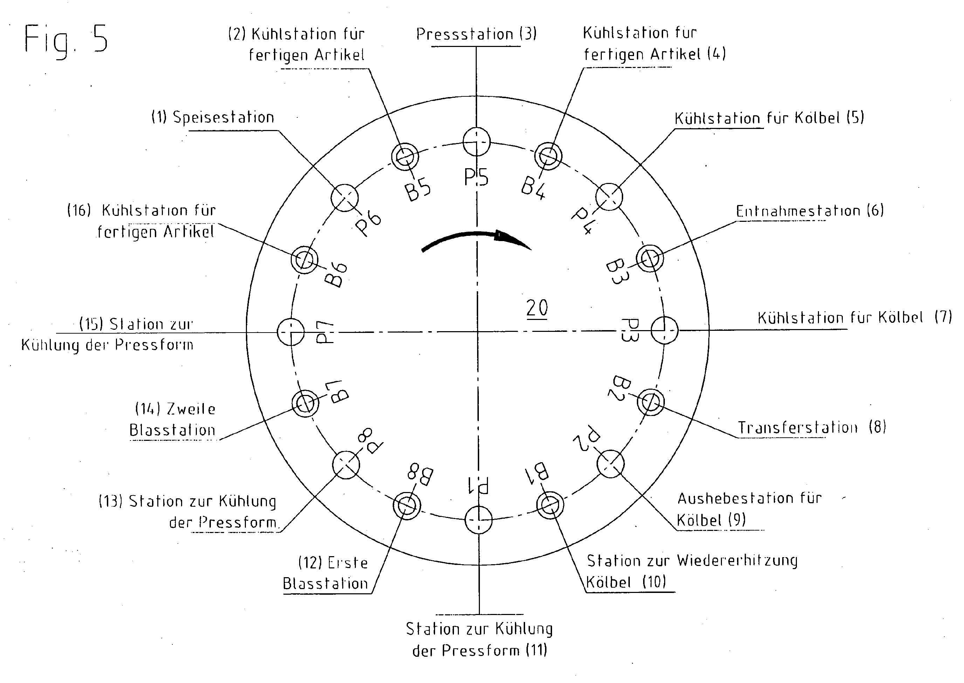

Im nächsten Takt gelangt diese Blasform B1 in eine Station 10 zur Rückerhitzung des Kölbels, wie dies in Fig. 5 gezeigt ist. In dieser Station wird vorzugsweise die Eigenwärme des Kölbels genutzt, um die äußere kalte Haut des Kölbels während der Stillstandsphase in dieser Station wieder aufzuheizen.

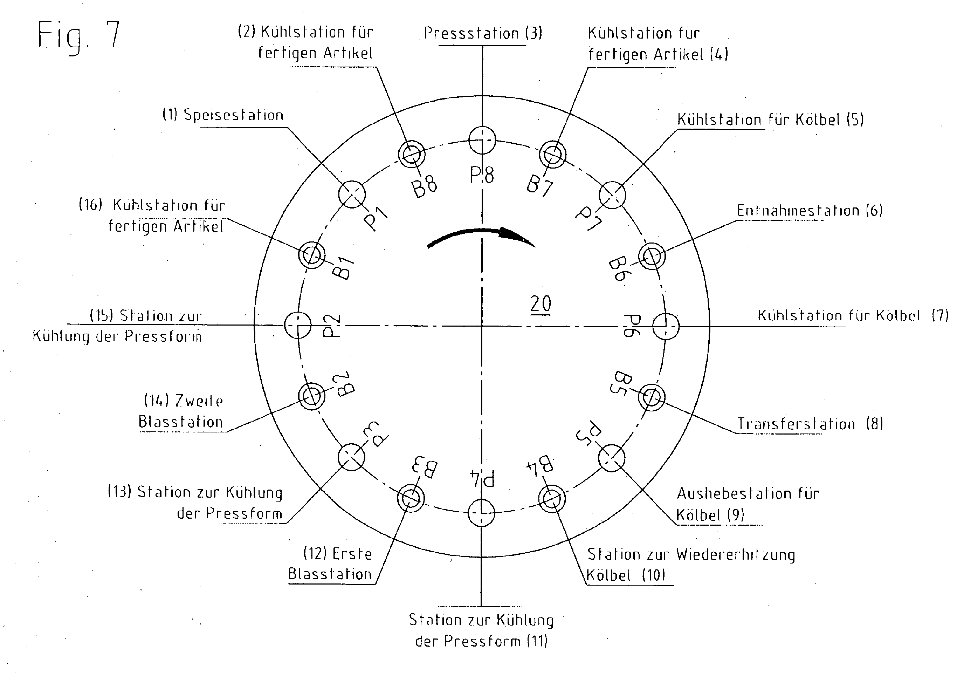

Die Blasform B 1 gelangt mit dem nächsten Schaltschritt in die erste Blasstation 12 und dann in eine zweite Blasstation 14. Auf diese zweite Blasstation 14 folgen dann im gezeigten Ausführungsbeispiel Kühlstationen 16, 2 und 4 für den fertig geblasenen Gegenstand, wobei in Fig. 7 die Schalttellerposition dargestellt ist, bei der sich die Blasform B1 in der ersten Kühlstation für den fertigen Artikel befindet.

Wenn die Kühlstationen 16, 2 und 4 durchlaufen sind, gelangt in einem weiteren Schalttakt die Blasform B 1 in die Entnahmestation 6, in der der fertige Artikel aus der Form entnommen wird.

Während der für die Blasform B 1 beschriebenen Taktvorgänge wird auch die Pressform P1, aus der in der Aushebestation 9 das Kölbel entnommen worden ist, auf dem Schaltteller weiter bewegt und durch Kühlstationen 11, 13 und 15 geführt, bevor diese Form erneut in der Speisestation 1 mit einem Glasposten beschickt wird.

Im Hinblick auf die vorstehende Schilderung des Verfahrensablaufs ist ersichtlich, dass sich nach Inbetriebnahme der Maschine ein kontinuierlicher und äußerst effektvoller Gesamtbetrieb ergibt, wobei das Handling der Vorrichtung für den Maschinenbediener im Vergleich zu herkömmlichen Doppeltischanordnungen wesentlich vereinfacht ist.

Zu betonen ist nochmals, dass durch die Anordnung sämtlicher Press-und Blasformen auf einem gemeinsamen Schaltteller 20 eine sehr kompakte Maschinenkonstruktion ermöglicht wird, die auch eine Optimierung der Presszeit ermöglicht, in der der jeweilige Glasartikel geformt und/oder gekühlt wird. Dies stellt in der Praxis einen bedeutsamen Vorteil dar. Überdies erlaubt eine permanente Luftkühlung zwischen Form und Formenhalter ebenfalls eine Steigerung der Produktionsgeschwindigkeit und verhindert gleichzeitig ein Überheizen der Formen.

## Patentansprüche

1. Verfahren zur Herstellung von Weithalsgefäßen aus Glas, insbesondere von einen offenen Henkel aufweisenden Krügen,
bei dem in aufeinander folgenden Stationen einer Maschine zunächst durch Press- und Kühlvorgänge ein halbfertiger Artikel in Form eines Kölbels hergestellt und dieser Kölbel dann in eine Blasform überführt, in weiteren Blas- und Kühlstationen zum Fertigprodukt geformt und aus der Maschine entnommen wird,
**dadurch gekennzeichnet,**
**dass** sämtliche aufeinander folgenden Stationen auf einer einzigen Kreisbahn angeordnet sind und die verwendeten Press- und Blasformen taktweise längs dieser Kreisbahn in stets gleicher Richtung bewegt werden, wobei eine jeweils gleiche Anzahl von Press- und Blasformen alternierend aufeinander folgt,
**dass** nach dem Einspeisen eines Glastropfens in eine der Pressformen und dem Durchlaufen einer vorgebbaren Anzahl von Press-und Kühlstationen das gebildete Kölbel in einer ebenfalls auf der Kreisbahn liegenden Aushebestation der Pressform entnommen und durch Rückförderung zu einer unmittelbar vor der Aushebestation gelegenen Transferstation oder durch Vorwärtsförderung zu einer unmittelbar auf die Aushebestation folgenden Transferstation in eine sich in dieser Transferstation befindende Blasform überführt wird, und
**dass** nach dem Durchlaufen einer vorgebbaren Anzahl von Blas-und Kühlstationen der aus dem Kölbel geformte fertige Artikel in einer ebenfalls auf der Kreisbahn gelegenen Entnahmestation entnommen wird.

2. Verfahren nach Anspruch 1,
**dadurch gekennzeichnet,**
**dass** die Press- und Blasformen bei jedem Bewegungstakt gemeinsam über einen Winkel bewegt werden, der gleich dem doppelten Wert des Winkelabstands zwischen zwei aufeinander folgenden Formen ist.

3. Verfahren nach Anspruch 1 oder 2,
**dadurch gekennzeichnet,**
**dass** auf der Kreisbahn jeweils alternierend die gleiche Anzahl von Pressformen und Blasformen geführt und vorzugsweise eine Bestückung 2 x 6 oder 2 x 7 oder 2 x 8 oder 2x10 gewählt und eine entsprechende Zahl von stationären Stationen vorgesehen wird.

4. Verfahren nach einem der vorhergehenden Ansprüche,
**dadurch gekennzeichnet,**
**dass** die Press- und Blasformen taktweise zu den auf der Kreisbahn vorgesehenen Stationen geführt werden, wobei die Taktzeit zumindest im Wesentlichen durch die Station mit der längsten Bearbeitungs- oder Behandlungsdauer vorgegeben wird.

5. Verfahren nach Anspruch 4,
**dadurch gekennzeichnet,**
**dass** anstelle einer Station mit längerer Bearbeitungs- oder Behandlungsdauer zumindest zwei entsprechend dem Taktwinkel aufeinander folgende Stationen gleicher Art vorgesehen werden.

6. Verfahren nach Anspruch 1,
**dadurch gekennzeichnet,**
**dass** der fertige Artikel im Verlauf des zweiten Durchlaufens der Kreisbahn der zugehörigen gekühlten Blasform entnommen wird.

7. Vorrichtung zur Herstellung von Weithalsgefäßen aus Glas, insbesondere von einen offenen Henkel aufweisenden Krügen, insbesondere nach einem oder mehreren der vorhergehenden Ansprüche,
**dadurch gekennzeichnet,**
**dass** ein taktweise antreibbarer Schaltteller (20) vorgesehen ist, auf dem in Kreisform eine vorgebbare und gleiche Anzahl von Pressformen (P1 bis P8) und Blasformen (B1 bis B8) jeweils alternierend angeordnet ist,
**dass** um den Schaltteller (20) verteilt stationäre Stationen (1 bis 16) angeordnet sind, die ausgehend von einer Glasposten-Speisestation (1) wenigstens eine Pressstation (3) und zumindest eine Kühlstation (5) umfassen, auf die eine Aushebestation (9) zur Kölbelentnahme und eine dieser unmittelbar vorgelagerte oder unmittelbar nachgelagerte Transferstation (8) folgen,
**dass** zum Zwecke der Überführung des jeweiligen Kölbels von der Aushebestation (9) zur Transferstation (8) eine Entnahme- und Verfahreinheit vorgesehen ist, und
**dass** nach der Transferstation (8) zumindest eine Blasstation (12, 14) vorgesehen ist, der zumindest eine Kühlstation (16, 2, 4) nachgeordnet ist, auf die eine Entnahmestation (6) für das fertige Produkt folgt.

8. Vorrichtung nach Anspruch 7,
**dadurch gekennzeichnet,**
**dass** zwischen der Transferstation (8) und einer ersten Blasstation (12) eine Station (10) zur Wiedererhitzung der äußeren Kölbelhaut, insbesondere durch Eigenwärme, vorgesehen ist.

9. Vorrichtung nach Anspruch 7 oder 8,
**dadurch gekennzeichnet,**
**dass** zwischen der Entnahmestation (6) und der Glasposten-Speisestation (1) zumindest eine Station (11, 15) zur Formenkühlung und/oder zum Formenwechsel vorgesehen ist.

10. Vorrichtung nach einem der Ansprüche 6 bis 9,
**dadurch gekennzeichnet,**
**dass** der Drehteller (20) von allen Seiten frei zugänglich ist.

11. Verwendung der Vorrichtung nach einem oder mehreren der Ansprüche 6 bis 10 als Univeral-Rundtisch-Pressautomat.
